# EUROPÄISCHE PATENTANMELDUNG

(11) **EP 1 002 691 A2**
(43) Veröffentlichungstag der Anmeldung: **24.05.2000**
(21) Anmeldenummer: 99250393.8
(22) Anmeldetag: 04.11.1999
(51) Int. Cl.: B60N 2/44

(54) **Antrieb für Verstellvorrichtungen in Kraftfahrzeugen**

(30) Priorität: 20.11.1998 DE 19855004
(71) Anmelder: Brose Fahrzeugteile GmbH & Co. KG Coburg, 96450 Coburg (DE)
(72) Erfinder: Schumann, Peter, 96253 Untersiemau (DE)
(74) Vertreter: Baumgärtel, Gunnar

(57) **Zusammenfassung**

Die Erfindung betrifft einen Antrieb für Verstelleinrichtungen in Kraftfahrzeugen, insbesondere für Fahrzeugsitze, mit einem beidseitig wirkenden Schrittschaltwerk (1) zur manuellen Erzeugung einer Drehbewegung. Aufgabe der vorliegenden Erfindung ist es, eine vereinfachte und kostengünstige Vorrichtung zur Verstellung von Fahrzeugsitzkomponenten in zwei Richtungen bereitzustellen. Erfindungsgemäß wird diese Aufgabe dadurch gelöst, daß das Schrittschaltwerk (1) abtriebsseitig mit einem selbsthemmenden Getriebe (10) verbunden ist.

## Beschreibung

Die Erfindung betrifft einen Antrieb für Verstellvorrichtungen in Kraftfahrzeugen nach dem Oberbegriff des Anspruchs 1.

Die Erfindung dient insbesondere dazu, die Verstellung von Komponenten eines Fahrzeugsitzes oder des gesamten Fahrzeugsitzes zu erleichtern.

Aus der DE 196 53 722 A1 ist ein beidseitig wirkender, manueller Antrieb zur Erzeugung einer Drehbewegung bekannt, bei dem zwischen einem Antriebs- und einem Abtriebselement ein Schrittschaltwerk angeordnet ist, das eine Feststellvorrichtung enthält, die abtriebsseitig auftretende Drehmomente sperrt. Diese Feststellvorrichtung ist als Schlingfederbremse ausgebildet und verhindert das ungewollte Verstellen der Verstelleinrichtung, beispielsweise einer Sitzlehne.

Um diese Feststellung zu erreichen, ist eine relativ komplizierte Mechanik mit einer Vielzahl von Bauteilen notwendig, die in einem aufwendigen Montageverfahren zusammengefügt werden müssen.

Aufgabe der vorliegenden Erfindung ist es, einen einfachen, mit geringem Aufwand an unterschiedliche Komponenten einer Kfz.-Verstellvorrichtung anzupassenden und kostengünstigen Antrieb bereitzustellen. Der Antrieb soll insbesondere zur Verstellung von Sitzkomponenten geeignet sein.

Erfindungsgemäß wird diese Aufgabe durch einen Antrieb mit den Merkmalen des Anspruchs 1 gelöst.

Durch die Anordnung eines selbsthemmenden Getriebes zwischen einem Schrittschaltwerk und der zu verstellenden Einrichtung ist es möglich, auf einfache und kostengünstige Weise eine ungewollte Verstellung der zu verstellenden Einrichtung, bei einem Fahrzeugsitz ist dies z.B. die Sitzlehne oder das Sitzkissen, durch ein abtriebsseitig aufgebrachtes Drehmoment zu verhindern.

Darüber hinaus kann durch eine entsprechende Übersetzung des Getriebes eine Anpassung an die Erfordernisse der jeweils zu verstellenden Einrichtung bzw. Komponente vorgenommen werden. Bei einer Sitzhöhenverstellung ist eine wesentlich kleinere Schrittweite pro Verstellhub bei einem gleichzeitig höheren Kraftaufwand erforderlich, verglichen mit einer Sitzlängsverstellung.

Um den Verstellweg pro Hub des Schrittschaltwerkes an den jeweiligen Einsatzbereich anpassen zu können, ist zwischen dem selbsthemmenden Getriebe und dem Schrittschaltwerk eine Unter- oder Übersetzungsstufe angeordnet ist. Bei einer Sitzlängsverstellung sind in der Regel größere Verstellwege pro Hub gewünscht als bei einer Sitzhöhenverstellung. Dementsprechend wird für die Sitzlängsverstellung eine Getriebestufe mit Übersetzungsstufe vorgesehen werden, während bei der Sitzhöhenverstellung eine Untersetzung angebracht ist. Einen Untersetzung hat zudem bei einer Sitzhöhenverstellung neben der feineren Einstellbarkeit den Vorteil, daß die aufgrund des Gewichtes des Sitznutzers relativ hohen Betätigungskräfte reduziert werden.

Zusätzlich zu der Getriebestufe oder als Alternative dazu kann zwischen dem selbsthemmenden Getriebe und dem Schrittschaltwerk ein Transmissionsglied angeordnet werden, wodurch eine räumliche Entkoppelung der beiden Baugruppen ermöglicht wird. Das Schrittschaltwerk kann so an einer Stelle angeordnet werden, wo es von dem Nutzer leicht zu bedienen ist, unabhängig davon, wo die Verstellung bewirkt werden soll. Das Getriebe ist zweckmäßigerweise in der Nähe der zu verstellenden Einrichtung angeordnet, kann aber auch ebenfalls über ein Transmissionsglied mit dieser verbunden sein. Als Transmissionsglieder kommen insbesondere Wellen und Zugmitteltriebe in Betracht, sind jedoch nicht auf diese beschränkt.

Die Art des selbsthemmenden Getriebes ist dabei prinzipiell frei wählbar; bevorzugt werden jedoch Planeten-, Taumel- oder Exzentergetriebe, wobei auch Schrägstirnrad-, Schrägkugelrad- oder Cyclogetriebe sowie Schnecken- oder Spindelgetriebe je nach den Gegebenheiten eingesetzt werden können.

Während das Getriebe von einem Schrittschaltwerk angetrieben wird, ist es abtriebsseitig mit einer Sitzhöhen-, Sitzneigungs-, oder Sitzlängs-, Sitzkissentiefen- oder Kopfstützenverstellvorrichtung verbunden ist.

In einer Variante der Erfindung ist das Getriebe abtriebsseitig direkt mit einer Sitzlehne verbunden, um eine unmittelbare Verstellung zu bewirken.

Alternativ zu einer direkten Einwirkung auf die zu verstellende Einrichtung weist das Getriebe eine Abtriebswelle mit einem darauf angeordneten Abtriebselement zum Bewegen der Verstelleinrichtung auf. Bevorzugt ist dieses Abtriebselement als Ritzel ausgebildet, wobei auch andere Ausbildungen, z.B. als Schnecke, Stirnrad oder Reibkupplungselement möglich sind.

Um die Schnittstelle zwischen dem Schrittschaltwerk und dem Getriebe möglichst einfach zu realisieren, weist das Schrittschaltwerk an seinem Ausgang ein Antriebselement auf, das mit dem Getriebe gekoppelt ist. Das Antriebselement arbeitet als Koppelglied zwischen den Baugruppen Schrittschaltwerk und Getriebe und kann gemeinsamer Bestandteil beider Baugruppen sein.

In einer Ausgestaltung der Erfindung ist das Antriebselement als Ritzel ausgebildet und kann somit beispielsweise bei einem Taumel- oder Exzentergetriebe sowohl das exzentrisch umlaufende Zahnrad als auch das Schrittweise verstellte Element des Schrittschaltwerkes darstellen.

Alternativ dazu kann das Antriebselement lediglich als Bestandteil des Getriebes ausgebildet werden, das vom Schrittschaltwerk beispielsweise durch eine exzentrische Lagerung, durch Ausbildung als Planetengetriebeteil etc. angetrieben wird.

Weiterhin besteht die Möglichkeit, zwischen dem Antriebselement und dem Getriebe zumindest eine Getriebestufe anzuordnen, um eine geeignete Eingangsübersetzung bereitzustellen.

Ist das Getriebe als Taumel- oder Exzentergetriebe ausgebildet, besteht eine vorteilhafte Ausbildung darin, ein Abtriebselement mit einer Innenverzahnung vorzusehen, in der ein exzentrisch gelagertes Stirnrad mit einer gegenüber der Innenverzahnung geringeren Zähnezahl abläuft, wobei das Stirnrad mit dem Antriebselement kraft- oder formschlüssig gekoppelt ist.

Alternativ zu einer kraft- oder formschlüssigen Verbindung zwischen Stirnrad und Antriebselement ist das Antriebselement bereits als Stirnrad des Taumel- oder Exzentergetriebes ausgebildet und exzentrisch zur Innenverzahnung des Abtriebselements gelagert.

In einer weiteren Variante ist an das Antriebselement ein Exzenter angeformt, auf dem ein Stirnrad gelagert ist, das durch den Exzenter angetrieben wird und in ein Taumel- oder Exzentergetriebe eingreift.

In einer Variante der Erfindung weist das Taumel- oder Exzentergetriebe ein Gehäuse auf, in dem ein von dem Antriebsritzel angetriebener und mit einem Planetenrad verbundener Exzenter und ein mit einer Abtriebswelle verbundenes und mit dem Planetenrad in Eingriff stehendes Abtriebs-Hohlrad angeordnet sind. Das Planetenrad weist ein mit dem Abtriebs-Hohlrad in Eingriff stehendes Antriebsrad und ein sich axial anschließendes Abstützrad auf, das mit einem gehäusefesten Abstütz-Hohlrad in Eingriff steht.

Zur Gewährleistung einer einfachen und kraftsparenden Betätigung der Verstellvorrichtung, weist das Schrittschaltwerk einen von Hand zu bedienenden Antriebshebel auf, mit dem wahlweise, ausgehend von einer Nullpunktlage, das Schrittschaltwerk und damit das Antriebselement in die eine oder andere Richtung bewegt bzw. gedreht wird. Das Antriebselement wird dabei nur dann gedreht, wenn sich der Antriebshebel von der Nullpunktlage entfernt, während es bei einer Bewegung des Antriebshebels in Richtung der Nullpunktlage nicht mitgenommen wird.

In einer Ausgestaltung dieses Antriebes ist der Antriebshebel um eine Antriebsachse schwenkbar und über zumindest ein Kippelement, das in Abhängigkeit von der Antriebsrichtung zwischen zwei Endpositionen hin und her kippt, mit dem Antriebselement wirkverbunden. In jeder Endposition der Kippbewegung greifen Verzahnungsbereiche des Kippelementes in eine Verzahnung des Antriebselementes ein und stellen so eine kraftschlüssige Verbindung zwischen dem Antriebshebel und dem Antriebselement her. Auf diese Weise wird das Antriebselement schrittweise um einen bestimmten Winkel verdreht.

Um einen möglichst geringen Bauraum zu beanspruchen, ist das Antriebselement mit einer Innenverzahnung versehen, in die das Kippelement bei der jeweiligen Kippbewegung eingreift. Das Kippelement ist beispielsweise schwenkbar auf einer Halteplatte gelagert, die ihrerseits auf der Antriebsachse des Schrittschaltwerkes gelagert ist. Das Kippelement und die Halteplatte können dabei aus Kunststoff oder Metall gefertigt sein und sind vorzugsweise vor der Montage über ein Filmscharnier oder eine Sollbruchstelle miteinander verbunden.

Anhand von in der Zeichnung dargestellten Ausführungsbeispielen soll der der Erfindung zugrundeliegende Gedanke näher erläutert werden. Es zeigen:
- Figur 1 -: eine Explosionsdarstellung einer Vorrichtung zum Verstellen weines Fahrzeugsitzes;
- Figur 2 -: eine Explosionsdarstellung eines über einen Hebel verstellbaren Schrittschaltwerkes;
- Figur 3 -: einen Schnitt durch ein Schrittschaltwerk mit einem Zwischengetriebe;
- Figur 4 -: einen Schnitt durch ein Schrittschaltwerk mit gekoppeltem Exzentergetriebe sowie
- Figur 5 -: einen Schnitt durch ein Schrittschaltwerk mit angeformtem Ritzel.

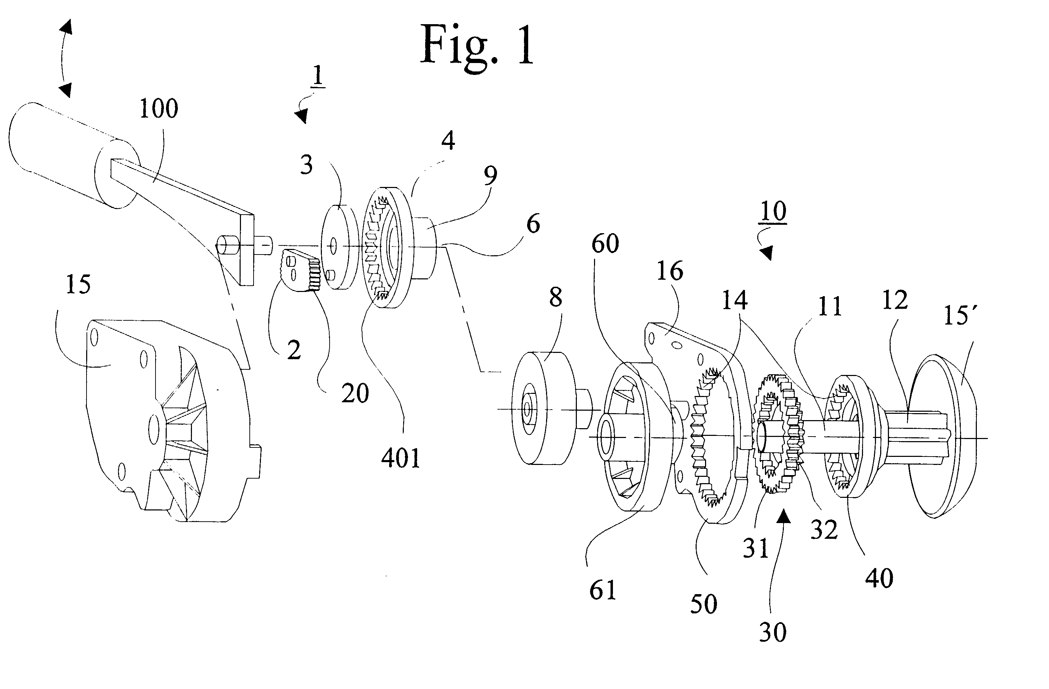

Figur 1 zeigt eine Explosionsdarstellung einer Vorrichtung zum Verstellen eines Fahrzeugsitzes mit einem als Schrittschaltwerk 1 ausgebildeten Antrieb der Verstellvorrichtung und einem selbsthemmenden Getriebe 10, das ein antriebsseitiges Drehmoment zur Verstelleinrichtung bzw. Fahrzeugsitzkomponente überträgt, ein abtriebsseitiges Drehmoment aber blockiert. Das Schrittschaltwerk 1 besteht aus einem Antriebshebel 100, der in Richtung des Doppelpfeiles winkelbegrenzt um eine Antriebsachse 6 verschwenkbar ist. Auf der Antriebsachse 6 sind außerdem eine Halteplatte 3 mit einem darauf außerhalb der Antriebsachse 6 gelagerten Kippelement 2 und ein Antriebselement 4 angeordnet. Aus der Sicht des Schrittschaltwerkes 1 realisiert das Antriebselement 4 den Abtrieb, jedoch wirkt es als Antrieb für das Getriebe 10, so daß hier die Bezeichnung Antriebselement 4 gewählt wurde.

Das Kippelement 2 wird aufgrund seiner Lagerung außerhalb der Antriebsachse 6 bei einem Verschwenken des Antriebshebels 100 aus einer Ruheposition mit seinen Rastelementen 20 mit korrespondierenden Rastelementen 401 des Antriebselementes 4 in Eingriff gebracht. In dem gewählten Ausführungsbeispiel sind die Rastelemente als Verzahnungen ausgebildet. Durch den Eingriff der Rastelemente 20, 401 wird ein durch den Antriebshebel 100 erzeugtes Drehmoment auf das Antriebselement 4 übertragen und in eine Drehung des Antriebselements 4 umgesetzt.

An dem Antriebselement 4 ist ein Ritzel 9 angeformt oder befestigt, das die Drehung über eine Getriebestufe 8 auf das selbsthemmende Getriebe 10 überträgt. Das Getriebe 10 ist als Taumel- oder Exzentergetriebe ausgebildet und weist ein Exzenterrad 61 auf, an dem ein Exzenter 60 angeformt ist. Die auf den Exzenter 60 übertragene Drehung bewirkt über die Lagerstelle des Exzenters 60 eine Taumelbewegung des Planetenrades 30, das auf dem Exzenter 60 gelagert ist. Bei dieser Taumelbewegung wälzt das Antriebsrad 32 des Planetenrades 30 auf der Innenverzahnung 14 des Abtriebshohlrades 40 ab.

Da das Abstützrad 31 des Planetenrades 30 sich an der Innenverzahnung 14 des Abstützhohlrades 50 abstützt, führt die Taumelbewegung des Planetenrades 30 zu einer in der Drehzahl untersetzten Drehung des Abtriebshohlrades 40.

Aufgrund der Verbindung des Abtriebshohlrades 40 mit der Abtriebswelle 11, wird die Drehbewegung auf das Abtriebselement 12, das hier als Ritzel ausgebildet ist, übertragen. Mit diesem Abtriebsritzel 12 kann eine Verstellung beispielsweise der Sitzlehnenneigung oder der Sitzneigung bzw. Sitzhöhe durchgeführt werden.

Die gesamte Anordnung von Schrittschaltwerk 1 und Getriebe 10 ist dabei in einem Gehäuse 15 mit einem Getriebedeckel 16 und einem Gehäuseunterteil 15' angeordnet.

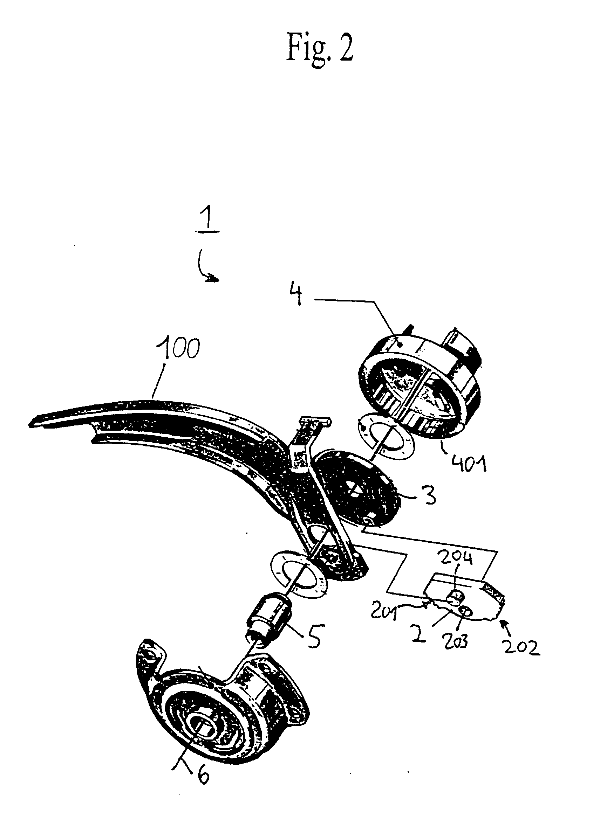

In Figur 2 ist ein als Antrieb für eine Sitzverstellvorrichtung dienendes Schrittschaltwerk 1 isoliert in einer Explosionsdarstellung gezeigt, anhand derer das Funktionsprinzip des Schrittschaltwerkes 1 verdeutlicht wird. Der Antriebshebel 100, das Kippelement 2, die Halteplatte 3 sowie das Antriebselement 4 mit einer Innenverzahnung 401 lagern auf einer Distanzhülse 5, die entlang einer Antriebsachse 6 angeordnet ist.

Das Kippelement 2 weist zwei symmetrisch angeordnete, auf einem Kreisumfang liegende Verzahnungsbereiche 201, 202 auf, wobei je nach Antriebsrichtung einer der Verzahnungsbereiche 201, 202 mit den Rastelementen 401 des Antriebselementes 4 in Eingriff bringbar ist. Auf der Symmetrieachse des Kippelemente 2 sind zwei in Bezug auf die Antriebsachse 6 radial beabstandete Lagerpunkte angeordnet, über die das Kippelement 2 zum einen mit dem Antriebshebel 100 und zum anderen mit der Halteplatte 3 verbunden ist. Der Lagerpunkt zwischen Wippe 2 und Antriebshebel 1 wird dabei durch einen Stift oder Zapfen 204 verwirklicht, der in eine entsprechende Aussparung des Antriebshebels 100 eingreift. In entsprechender Weise wird der Lagerpunkt zwischen der Halteplatte 3 und dem Kippelement 2 durch einen Stift oder Zapfen der Halteplatte 3 ausgebildet, der in ein Loch 203 des Kippelements 2 eingreift.

Bei einer Schwenkbewegung des Antriebshebels 100 aus der Nullpunktlage heraus wird der in dem Loch des Antriebshebels 100 lagernde Stift 204 des Kippelementes 2 ebenfalls um die Antriebsachse 6 geschwenkt. Aufgrund von Reibungskräften zwischen der Halteplatte 3 und der Distanzhülse 5 sowie ggf. dem Antriebselement 4 oder durch Einsatz einer Drehfeder widersetzt sich die Halteplatte 3 zunächst einem Mitdrehen mit dem Antriebshebel 100. Der Stift der Halteplatte 3 bildet dabei ein Gegenlager, so daß an dem Kippelement 2 ein Drehmoment angreift, wodurch das Kippelement 2 verkippt und je nach Antriebsrichtung einer der Verzahnungsbereiche 201, 202 der Wippe 2 in die Rastelemente 401 des Antriebselementes 4 eingreift.

Bei einem Schwenken des Antriebshebels 100 nach oben aus der Nullpunktlage heraus wird das Kippelement 2 beispielsweise nach links verkippt, so daß der Verzahnungsbereich 201 mit der Verzahnung 401 des Antriebselementes 4 in Eingriff tritt. Auf diese Weise wird eine Drehbewegung des Antriebshebels 100 auf das Antriebselement 4 übertragen.

Bei einem Rückschwenken des Antriebshebels 100 in die Nullpunktlage wird das an dem Kippelement 2 anliegende Drehmoment aufgehoben und Verzahnungsbereiche 201, 202 geraten außer Eingriff. Bei der Rückführung des Antriebshebels 100 kommt es zu keiner Rückstellbewegung des Antriebselementes 4.

Bei einer Betätigung des Antriebshebels 100 in entgegengesetzter Richtung wird eine schrittweise Drehung des Antriebselementes 4 entsprechend bewirkt.

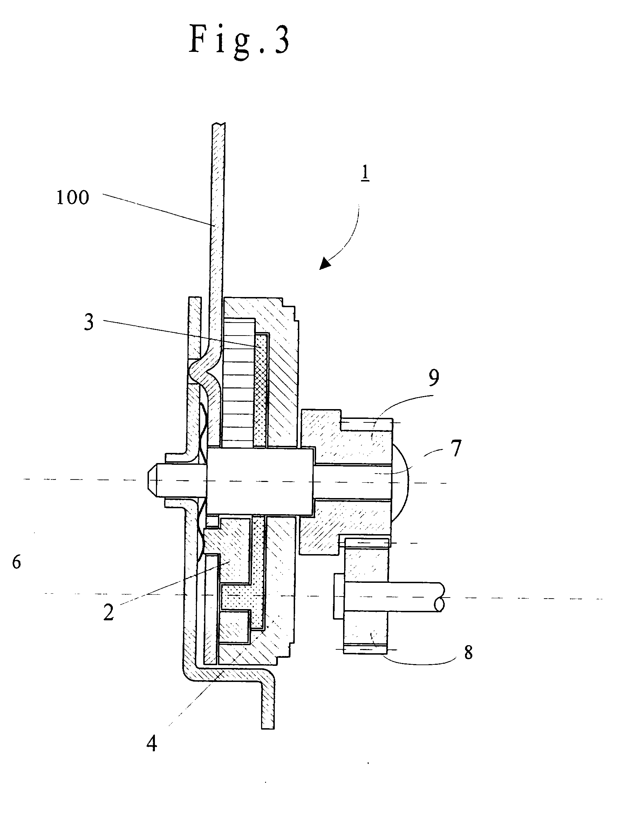

Fig. 3 zeigt einen Schnitt durch ein Schrittschaltwerk 1 mit einem um die Antriebsachse 6 schwenkbaren Antriebshebel 100 und einer Halteplatte 3, auf der ein Kippelement 2 gelagert ist. Das Kippelement 2 ist ebenfalls mit dem Antriebshebel 100 verbunden und greift bei einer Verdrehung in das Antriebselement 4 ein, das kraft- oder formschlüssig mit der Welle 7 verbunden ist und auf diese die Drehbewegung überträgt. Auf der Welle 7 ist ein Ritzel 9 beispielsweise durch Aufpressen oder über eine Vielzahnverbindung befestigt und mittels eines Verformungselementes oder einer Nietverbindung axial festgelegt. Das Ritzel 9 kämmt eine Getriebestufe 8, die die Drehbewegung bzw. das Drehmoment auf das nicht dargestellte, selbsthemmende Getriebe 10 überträgt.

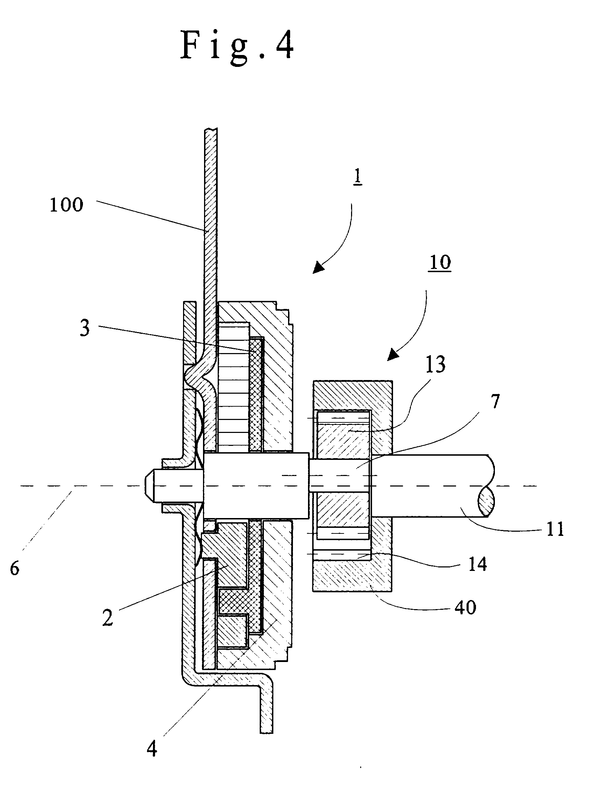

In Fig. 4 ist eine andere Art der Koppelung zwischen einem Schrittschaltwerk 1 und einem Getriebe 10 gezeigt. Der Aufbau des Schrittschaltwerkes 1 ist mit dem in Fig. 3 beschriebenen identisch. Die Welle 7 ist jedoch exzentrisch zu der Antriebsachse 6 angeordnet und trägt ein Stirnrad 13, das in einer Innenverzahnung 14 eines Abtriebshohlrades 40 eingreift. Das Abtriebshohlrad 40 wird durch die Drehbewegung des Stirnrades 13 angetrieben und dreht seinerseits die Abtriebswelle 11, die mit der zu verstellenden, nicht dargestellten Sitzkomponente als Verstelleinrichtung verbunden ist.

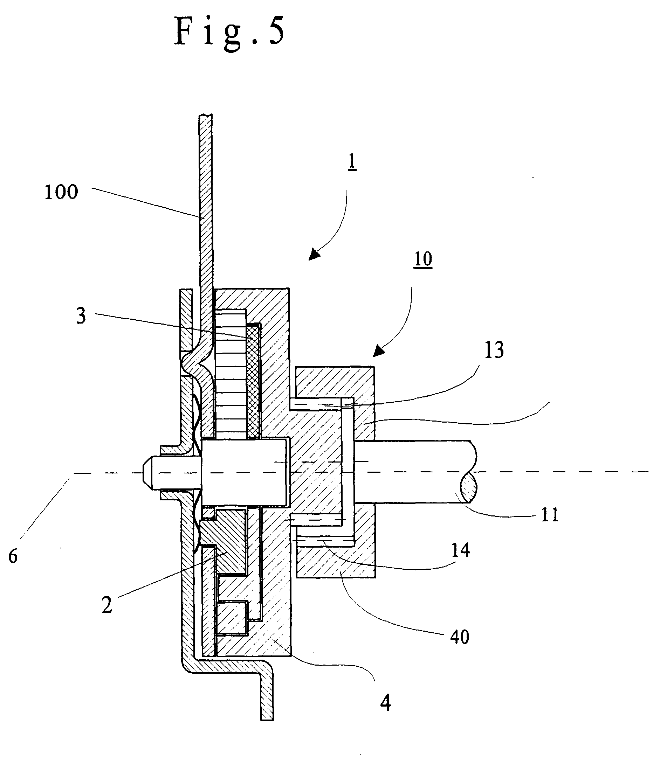

Fig. 5 zeigt eine Ausführungsform einer Koppelung zwischen einem Schrittschaltwerk 1 und einem Exzentergetriebe 10, bei der an das Antriebselement 4 direkt ein exzentrisch zu der Antriebsachse 6 angeordnetes Stirnrad 13 angeformt ist, das mit einer Innenverzahnung 14 kämmt und zusammen mit dem Abtriebshohlrad 40 ein Exzentergetriebe 10 bildet.

### Bezugszeichenliste

- 1 -: Schrittschaltwerk
- 2 -: Kippelement
- 3 -: Halteplatte
- 4 -: Antriebselement
- 5 -: Distanzhülse
- 6 -: Antriebsachse
- 7 -: Welle
- 8 -: Getriebestufe
- 9 -: Ritzel
- 10 -: Taumel- oder Exzentergetriebe
- 11 -: Abtriebswelle
- 12 -: Abtriebselement
- 13 -: Stirnrad
- 14 -: Innenverzahnung
- 15 -: Gehäuse
- 15'-: Gehäuseunterteil
- 16 -: Getriebedeckel
- 20 -: Rastelemente
- 30 -: Planetenrad
- 31 -: Abstützrad
- 32 -: Antriebsrad
- 40 -: Abtriebshohlrad
- 50 -: Abstützhohlrad
- 60 -: Exzenter
- 61 -: Exzenterrad
- 100 -: Antriebshebel
- 200 -: Verzahnungselemente
- 201 -: Verzahnungsbereich
- 202 -: Verzahnungsbereich
- 203 -: Loch
- 204 -: Zapfen
- 401 -: Rastelemente

## Patentansprüche

1. Beidseitig wirkender Antrieb für Verstellvorrichtungen, insbesondere für Fahrzeugsitze, mit Komponenten eines beidseitig wirkenden Schrittschaltwerks (1) zur manuellen Erzeugung und Übertragung einer Drehbewegung mittels eines schwenkbar gelagerten Antriebshebels (100), der aus einer Nullpunktlage in die eine oder andere Drehrichtung um eine Drehachse (6) die Drehbewegung erzeugt, eines Antriebsrades (4) und zumindest eines an dem Antriebshebel (10) angeordneten Kopplungselements (2) zur Übertragung eines Drehmoments auf das Antriebsrad (4) sowie mit einem mit dem Antriebsrad (4) gekoppelten selbsthemmenden Getriebe (10), zum Sperren abtriebsseitig eingeleiteter Drehmomente.

2. Antrieb nach Anspruch 1, **dadurch gekennzeichnet**, daß zwischen dem selbsthemmenden Getriebe (10) und dem Schrittschaltwerk (1) eine Unter- oder Übersetzungsstufe angeordnet ist.

3. Antrieb nach Anspruch 1 oder 2, **dadurch gekennzeichnet**, daß zwischen dem selbsthemmenden Getriebe (10) und dem Schrittschaltwerk (1) ein Transmissionsglied angeordnet ist.

4. Antrieb nach einem der voranstehenden Ansprüche, **dadurch gekennzeichnet**, daß das selbsthemmende Getriebe (10) aus einem Planeten-, Taumel- oder Exzentergetriebe besteht.

5. Antrieb nach mindestens einem der vorangehenden Ansprüche, **dadurch gekennzeichnet**, daß das selbsthemmende Getriebe (10) abtriebsseitig mit einer als Sitzhöhen-, Sitzneigungs-, Sitzlängs-, Sitzkissentiefen- oder Kopfstützenverstellung ausgebildeten Verstelleinrichtung verbunden ist.

6. Antrieb nach einem der voranstehenden Ansprüche, **dadurch gekennzeichnet**, daß das Getriebe (10) abtriebsseitig direkt mit einer als Sitzlehne ausgebildeten Verstelleinrichtung verbunden ist.

7. Antrieb nach einem der Ansprüche 1 bis 5, **dadurch gekennzeichnet**, daß das Getriebe (10) eine Abtriebswelle (11) mit einem darauf angeordneten Abtriebselement (12) zum Bewegen der Verstelleinrichtung aufweist.

8. Antrieb nach Anspruch 7, **dadurch gekennzeichnet**, daß das Abtriebselement (12) als Ritzel ausgebildet ist.

9. Antrieb nach einem der voranstehenden Ansprüche, **dadurch gekennzeichnet**, daß das Schrittschaltwerk (1) über ein Antriebselement (4) mit dem Getriebe (10) gekoppelt ist.

10. Antrieb nach Anspruch 9, **dadurch gekennzeichnet**, daß das Antriebselement (4) als Ritzel (9) ausgebildet ist.

11. Antrieb nach Anspruch 9, **dadurch gekennzeichnet**, daß das Antriebselement (4) Bestandteil des Getriebes (10) ist.

12. Antrieb nach einem der Ansprüche 9 oder 10, **dadurch gekennzeichnet**, daß zwischen dem Antriebselement (4) und dem Getriebe (10) zumindest eine Getriebestufe (8) angeordnet ist.

13. Antrieb nach einem der Ansprüche 2 bis 12, **dadurch gekennzeichnet**, daß das Taumel- oder Exzentergetriebe (10) ein Abtriebselement (12) mit einer Innenverzahnung (14) aufweist, in der ein exzentrisch gelagertes Stirnrad (13) mit einer gegenüber der Innenverzahnung (14) geringeren Zähnezahl abläuft, und daß das Stirnrad (13) mit dem Antriebselement (4) gekoppelt ist.

14. Antrieb nach Anspruch 13, **dadurch gekennzeichnet**, daß das Antriebselement (4) als Stirnrad (13) des Taumel- oder Exzentergetriebes (10) ausgebildet und exzentrisch zur Innenverzahnung (14) des Abtriebselements (12) gelagert ist.

15. Antrieb nach Anspruch 13 oder 14, **dadurch gekennzeichnet,** daß ein das Stirnrad (13) antreibender Exzenter (60) des Taumel- oder Exzentergetriebes (10) an dem Antriebselement (4) angeformt ist .

16. Antrieb nach einem der Ansprüche 2 bis 15, **dadurch gekennzeichnet**, daß das Taumel- oder Exzentergetriebe (10) ein Gehäuse (15) aufweist, in dem ein von dem Antriebsritzel (9) angetriebener und mit einem Planetenrad (30) verbundener Exzenter (60) und ein mit einer Abtriebswelle (11) verbundenes und mit dem Planetenrad (30) in Eingriff stehendes Abtriebshohlrad (40) angeordnet sind, wobei das Planetenrad (30) ein mit dem Abtriebshohlrad (40) in Eingriff stehendes Antriebsrad (32) und ein sich axial anschließendes Abstützrad (31) aufweist, das mit einem gehäusefesten Abstützhohlrad (50) in Eingriff steht.

17. Antrieb nach einem der voranstehenden Ansprüche, **dadurch gekennzeichnet**, daß das Schrittschaltwerk (1) einen Antriebshebel (100) aufweist, mit dem wahlweise, ausgehend von einer Nullpunkt-Lage, das Antriebselement (4) in die eine oder andere Richtung gedreht wird, wobei das Antriebselement (4) nur dann gedreht wird, wenn sich der Antriebshebel (100) von der Nullpunkt-Lage entfernt, während es bei einer Bewegung des Antriebshebels (100) in Richtung der Nullpunkt-Lage nicht mitgenommen wird.

18. Antrieb nach Anspruch 17, **dadurch gekennzeichnet**, daß der Antriebshebel (100) um eine Antriebsachse (6) schwenkbar und über zumindest ein Kippelement (2), das in Abhängigkeit von der Antriebsrichtung zwischen zwei Endpositionen hin und her kippt, mit dem Antriebselement (4) wirkverbunden ist, wobei in jeder Endposition Verzahnungsbereiche (201, 202) des Kippelementes (2) in eine Verzahnung (401) des Antriebselementes (4) eingreifen.

19. Antrieb nach Anspruch 18, **dadurch gekennzeichnet**, daß das Kippelement (2) in eine Innenverzahnung (401) des Antriebselementes (4) eingreift.

20. Antrieb nach Anspruch 18 oder 19, **dadurch gekennzeichnet**, daß das Kippelement (2) an einer auf der Antriebsachse (6) angeordneten Halteplatte (3) schwenkbar gelagert ist.

21. Antrieb nach Anspruch 20, **dadurch gekennzeichnet**, daß das Kippelement (2) und die Halteplatte (3) aus Kunststoff oder Metall gefertigt sind.

22. Antrieb nach Anspruch 20, **dadurch gekennzeichnet**, daß das Kippelement (2) und die Halteplatte (3) vor der Montage über ein Filmscharnier oder eine Sollbruchstelle miteinander verbunden sind.
